# FASCICULE DE BREVET EUROPEEN

(11) **EP 2 294 011 B1**
(45) Date de publication et mention de la délivrance du brevet: **16.01.2019**
(21) Numéro de dépôt: 09784200.9
(22) Date de dépôt: 10.06.2009
(51) Int. Cl.: B01J 29/03, B01J 35/10, C01F 7/44, C04B 35/111, C04B 38/00, C04B 111/00, C01F 7/36

(54) **PROCÉDÉ DE PRÉPARATION D'UNE ALUMINE A MESOPOROSITE CONTROLEE**
VERFAHREN ZUR HERSTELLUNG EINER TONERDE MIT GESTEUERTER MIKROPOROSITÄT
PROCESS FOR PREPARING AN ALUMINA WITH CONTROLLED MESOPOROSITY

(30) Priorité: 27.06.2008 FR 0803691
(43) Date de publication de la demande: 16.03.2011
(73) Titulaire: IFP Energies nouvelles, 92500 Rueil-Malmaison (FR)
(72) Inventeur: ROULEAU Loïc, F-69390 Charly (FR); ROYER Sébastien, F-86360 Montamise (FR); LANCELOT Christine, F-59260 Hellemes (FR); DUMEIGNIL Franck, F-59273 Fretin (FR); PAYEN Edmond, F-59144 Jenlain (FR); BLANCHARD Pascal, F-62410 Hulluch (FR)
(74) Mandataire: IFP Energies nouvelles
(86) Numéro de dépôt international: PCT/FR2009/000682
(87) Numéro de publication internationale: WO 2010/004106

(56) Documents cités:
- EP-A- 0 974 555
- FR-A- 2 772 017
- RAY JAGADISH C. ; YOU KWANG-SEOK ; AHN JI-WHAN ; AHN WHA-SEUNG: "Mesoporous alumina (I): Comparison of synthesis schemes using anionic, cationic, and non-ionic surfactants" MICROPOROUS AND MESOPOROUS MATERIALS, vol. 100, no. 1-3, 2007, pages 183-190, XP002499038 Elsevier, Amsterdam, PAYS-BAS
- SAÚL CABRERA, JAMAL EL HASKOURI, JAIME ALAMO, AURELIO BELTRÁN, DANIEL BELTRÁN, SAGRARIO MENDIOROZ, M. DOLORES MARCOS, PEDRO AMORÓS: "Surfactant-Assisted Synthesis of Mesoporous Alumina Showing Continuously Adjustable Pore Sizes" ADVANCED MATERIALS, vol. 11, no. 5, mars 1999 (1999-03), pages 379-381, XP002499039 DOI: 10.1002/(SICI)1521-4095(199903)11:5<379::A ID-ADMA379>3.0.CO;2-6
- V. GONZÁLEZ-PEÑA, I. DÍAZ, C. MÁRQUEZ-ALVAREZ, E. SASTRE AND J. PÉREZ-PARIENTE: "Thermally stable mesoporous alumina synthesized with non-ionic surfactants in the presence of amines" MICROPOROUS AND MESOPOROUS MATERIALS, vol. 44-45, 6 avril 2001 (2001-04-06), pages 203-210, XP002499040 doi:10.1016/S1387-1811(01)00185-8
- QIAN LIU, AIQIN WANG, XIAODONG WANG, TAO ZHANG: "Morphologically controlled synthesis of mesoporous alumina" MICROPOROUS AND MESOPOROUS MATERIALS, vol. 100, no. 1-3, 23 mars 2007 (2007-03-23), pages 35-44, XP002499041

## Description

### Domaine technique

La présente invention se rapporte au domaine des alumines à mésoporosité contrôlée. Plus précisément, elle se rapporte à un nouveau procédé de préparation d'une alumine à mésoporosité contrôlée en vue de l'utilisation de ladite alumine en tant que support de catalyseurs, eux-mêmes mis en oeuvre dans des réactions pour diverses applications catalytiques.

### Art antérieur

Les alumines poreuses sont couramment utilisées en tant que support de catalyseur ou d'adsorbant. Ces alumines poreuses sont préparées par précipitation de sels d'aluminium ou par hydrolyse d'alcoxydes d'aluminium. Elles ont une bonne stabilité thermique et chimique mais ont généralement une distribution de taille de pores relativement large et une surface spécifique relativement modérée.

Les alumines de bonne stabilité thermique et chimique, à taille de mésopores calibrée et de surface spécifique élevée, sont activement recherchées pour les applications en catalyse ou en adsorption. Les alumines préparées par précipitation de sels d'aluminium ou hydrolyse de précurseurs d'aluminium en présence de surfactants cationiques, anioniques, neutres ou non ioniques présentent, selon les conditions opératoires de préparation, une bonne stabilité thermique et chimique, une taille de mésopores calibrée et une surface spécifique élevée. La demande de brevet WO2004/014799 décrit la préparation d'une telle alumine par traitement hydrothermal d'un mélange comprenant un alcoxyde d'aluminium, notamment le tri-sec butoxyde d'aluminium, un surfactant cationique, notamment un ammonium quaternaire de formule CH₃(CH₂)ₙ₋₁N(CH₃)₃Br (n = 12, 14, 16 ou 18), un solvant organique de type alcool notamment le 1-butanol, le 2-butanol, le 1-propanol ou le 2-propanol et de l'eau. L'alumine obtenue par le procédé divulgué dans la demande de brevet WO2004/014799 présente une bonne stabilité thermique, une taille de mésopores calibrée à une valeur dépendant notamment de la taille du surfactant (ou de n) et une surface spécifique élevée. Néanmoins, elle présente un volume mésoporeux relativement modéré ce qui conduit à des performances catalytiques médiocres lorsqu'elle est présente dans un catalyseur mis en oeuvre dans diverses réactions de conversion d'hydrocarbures.

L'article scientifique « Mesoporous alumina (I) : Comparison of synthesis schemes using anionic, cationic, and non-ionic surfactants », MMS, volume 100, n° 1-3, page 183, décrit une alumine mésoporeuse préparée en procédant au mélange en solution aqueuse de tri-sec butoxyde d'aluminium, de bromure de cétyltriméthylammonium et de *sec*-butanol, puis au traitement hydrothermal dudit mélange, au séchage et à la calcination du solide obtenu. Il est démontré qu'une vitesse d'hydrolyse ralentie par l'utilisation d'un alcool présentant un effet stérique accru, ainsi que la diminution de la quantité de surfactant et l'augmentation de la quantité de solvant, permettent d'obtenir un solide présentant des propriétés structurales améliorées.

### Objet et intérêt de l'invention

La présente invention porte sur un nouveau procédé de préparation d'une alumine mésoporeuse comprenant les étapes suivantes :
a) le mélange en solution aqueuse d'au moins une source d'aluminium constituée par un alcoxyde d'aluminium, d'au moins un surfactant cationique et d'au moins un solvant organique choisi parmi le méthanol et l'éthanol ;
b) le traitement hydrothermal du mélange issu de ladite étape a) ;
c) le séchage du solide issu de ladite étape b) ;
d) la calcination du solide issu de ladite étape c).

L'alumine mésoporeuse préparée selon le procédé de l'invention est une alumine à mésoporosité contrôlée, qui présente une bonne stabilité thermique et chimique ainsi qu'une surface spécifique élevée. De manière surprenante et avantageuse, le procédé de préparation selon l'invention conduit à la production d'une alumine mésoporeuse présentant un volume mésoporeux élevé, c'est-à-dire supérieur ou égal à 0,60 ml/g, de préférence supérieur ou égal à 0,8 ml/g. Il en résulte ainsi de bien meilleures performances catalytiques d'un catalyseur comprenant ladite alumine mésoporeuse et mis en oeuvre dans un procédé de conversion d'une charge hydrocarbonée par rapport aux performances catalytiques obtenues au moyen d'un catalyseur comprenant une alumine mésoporeuse préparée selon un procédé antérieur. En particulier, un catalyseur comprenant ladite alumine mésoporeuse préparée selon le procédé de l'invention et mis en oeuvre dans un procédé d'hydrodésulfuration d'hydrocarbures conduit à de bien meilleures performances catalytiques, notamment en termes de conversion et de sélectivité, par rapport à celles obtenues au moyen d'un catalyseur comprenant une alumine mésoporeuse préparée selon un procédé de l'art antérieur. De manière surprenante, un catalyseur comprenant ladite alumine mésoporeuse préparée selon le procédé de l'invention est plus actif et plus sélectif, notamment lorsqu'il est mis en oeuvre dans un procédé d'hydrodésulfuration d'hydrocarbures, qu'un catalyseur comprenant une alumine mésoporeuse préparée selon un procédé appartenant à l'art antérieur. Par ailleurs, un autre avantage du procédé de préparation de l'alumine mésoporeuse selon l'invention est qu'il est simple et économique.

### Description de l'invention

L'objet de la présente invention porte sur un procédé de préparation d'une alumine mésoporeuse comprenant les étapes suivantes :
a) le mélange en solution aqueuse d'au moins une source d'aluminium constituée par un alcoxyde d'aluminium, d'au moins un surfactant cationique et d'au moins un solvant organique choisi parmi le méthanol et l'éthanol ;
b) le traitement hydrothermal du mélange issu de ladite étape a) ;
c) le séchage du solide issu de ladite étape b) ;
d) la calcination du solide issu de ladite étape c).

Le procédé selon l'invention conduit à une alumine mésoporeuse de bonne stabilité thermique et chimique, ayant un diamètre de mésopores uniforme et contrôlé, une surface spécifique élevée et un volume mésoporeux élevé. L'alumine mésoporeuse préparée selon le procédé de l'invention est dépourvue de micropores et de macropores. L'alumine mésoporeuse préparée selon le procédé de l'invention présentent une structure fibrillaire, nodulaire ou vermiculaire avec des mésopores de diamètre régulier. De préférence, l'alumine à mésoporosité contrôlée obtenue selon le procédé de l'invention se présente sous une forme fibrillaire. Elle présente une surface spécifique supérieure à 300 m²/g, préférentiellement supérieure à 400 m²/g et un volume mésoporeux supérieur ou égal à 0,6 ml/g, de préférence supérieur ou égal à 0,8 ml/g.

L'étape a) du procédé selon l'invention est avantageusement réalisée en procédant d'abord au mélange d'au moins dudit surfactant cationique et d'au moins de ladite source d'aluminium dans ledit solvant organique choisi parmi le méthanol et l'éthanol puis à une addition lente d'eau dans ledit mélange. Ladite étape a) est avantageusement réalisée à température ambiante.

Conformément à l'étape a) du procédé selon l'invention, la composition molaire du mélange est telle que le rapport molaire eau/source d'aluminium est compris entre 0,1 et 10 et de préférence entre 1 et 3 et le rapport molaire surfactant cationique/source d'aluminium est compris entre 0,1 et 10, de préférence entre 0,1 et 2 et le rapport molaire solvant organique / eau est compris entre 4 et 6.

Le surfactant cationique employé pour la mise en oeuvre de l'étape a) du procédé selon l'invention est préférentiellement un composé cationique de type ammonium quaternaire de formule CH₃(CH₂)ₙN(CH₃)₃,X, avec n compris entre 8 et 22, préférentiellement n est compris entre 12 et 16 et X étant un halogénure, un acétate, un phosphate, un nitrate, un méthylsulfate ou un hydroxyde, préférentiellement un halogénure et très préférentiellement un bromure. La taille du surfactant ou la longueur de la chaîne -(CH₂)ₙ- permet l'ajustement du diamètre des mésopores de l'alumine. Le surfactant cationique choisi est préférentiellement le bromure de cétyltriméthyammonium (CTAB, n=15). Les molécules de surfactant s'associent entre elles dans les conditions de synthèse et forment une agrégation micellaire organisée dans le milieu de synthèse. La quantité de surfactant ne doit être ni trop faible pour assurer ce rôle d'agrégation micellaire et ni trop élevée pour conférer au procédé un coût raisonnable.

La source d'aluminium employée pour la mise en oeuvre de l'étape a) du procédé de préparation selon l'invention est un alcoxyde d'aluminium de formule Al(OR)₃, R étant un groupe alkyle linéaire ou ramifié, préférentiellement ramifié. De manière très préférée, ladite source d'aluminium est le tri-sec butoxyde d'aluminium (Al(OCH(CH₃)(C₂H₅))₃) ou l'isopropoxyde d'aluminium (Al(OCH(CH₃)₂)₃).

L'eau employée pour la mise en oeuvre de ladite étape a) du procédé de préparation selon l'invention assure l'hydrolyse de l'alcoxyde d'aluminium avec une vitesse limitée par rapport à celle à laquelle est réalisée l'agrégation des micelles de surfactant. La quantité d'eau ne doit être ni trop faible pour assurer l'hydrolyse de l'alcoxyde d'aluminium ni trop élevée pour éviter une réaction d'hydrolyse trop rapide vis à vis de l'agrégation micellaire.

Le solvant organique choisi parmi le méthanol et l'éthanol utilisé pour la mise en oeuvre de ladite étape a) du procédé selon l'invention permet en particulier de diluer l'eau et de ralentir l'hydrolyse de l'alcoxyde d'aluminium. De manière très préférée, ledit solvant organique est l'éthanol.

Le mélange formé au cours de ladite étape a) du procédé de préparation selon l'invention comprend avantageusement un complexant de l'aluminium pour ralentir la vitesse d'hydrolyse de l'alcoxyde d'aluminium. Il s'agit par exemple du butane-1,3-diol ou de la triéthanolamine. La proportion du complexant est tel que le rapport molaire complexant/source d'aluminium soit compris entre 0 et 10, préférentiellement entre 0 et 2, très préférentiellement entre 0,1 et 2. De manière avantageuse, ledit complexant est introduit simultanément avec le surfactant et la source d'aluminium.

Conformément à l'étape b) du procédé de préparation selon l'invention, le traitement hydrothermal est opéré à une température comprise préférentiellement entre 25°C et 200°C, très préférentiellement entre 80°C et 150°C. Il est réalisé pendant une durée comprise préférentiellement entre 5 heures et 100 heures, très préférentiellement entre 10 heures et 50 heures.

A l'issue dudit traitement hydrothermal, le solide est récupéré par les techniques usuelles de séparation (filtration ou centrifugation) et lavé abondamment avec un solvant, préférentiellement le solvant organique utilisé lors de la mise en oeuvre de ladite étape a), afin d'extraire du solide les espèces dissoutes excédentaires, en particulier le surfactant cationique.

Conformément à l'étape c) du procédé de préparation selon l'invention, le séchage est opéré à une température préférentiellement comprise entre 25 et 150°C et très préférentiellement comprise entre 50 et 120°C. Il est réalisé sous air ambiant. Il est destiné à évaporer la majorité du solvant organique alcoolique utilisé lors de la mise en oeuvre de ladite étape a) du procédé selon l'invention.

Conformément à l'étape d) du procédé de préparation selon l'invention, la calcination est opérée à une température préférentiellement comprise entre 400 et 800°C et très préférentiellement comprise entre 500 et 750°C. Elle est réalisée pendant une durée préférentiellement comprise entre 2 et 12 h et très préférentiellement comprise entre 4 et 10 h sous air ambiant. Elle est destinée à extraire le surfactant par décomposition thermique et ainsi à libérer la mésoporosité de ladite alumine mésoporeuse.

L'alumine mésoporeuse obtenue selon le procédé de l'invention est une alumine à mésoporosité contrôlée. Elle est caractérisée par plusieurs techniques analytiques. Ladite alumine mésoporeuse est caractérisée par la technique de diffraction des rayons X aux bas angles (valeurs de l'angle 2 theta comprises entre 0,5 et 6°, radiation Cu K_{α}) et aux grands angles (valeurs de l'angle 2 theta comprises entre 5 et 100°, radiation Cu K_{α}). Le diffractogramme de rayons X aux bas angles de ladite alumine présente un pic de diffusion à 2 theta compris entre 1° et 3° (radiation Cu K_{α}) qui révèle que l'alumine obtenue est une structure formée de mésopores sans ordre parfait à longue distance et qu'elle présente un diamètre de mésopores uniforme. Le diffractogramme de rayons X aux grands angles de ladite alumine mésoporeuse révèle qu'il s'agit d'une alumine gamma mal cristallisée. Ladite alumine mésoporeuse obtenue selon le procédé de l'invention est également analysée par microscopie électronique à transmission (MET) qui permet la formation d'une image du solide étudié, les contrastes observés étant caractéristiques de l'organisation structurale, de la texture ou bien de la morphologie du solide observé. Les images MET obtenues pour l'alumine mésoporeuse préparée selon le procédé de l'invention présentent une structure fibrillaire, nodulaire ou vermiculaire avec des mésopores de diamètre régulier. De préférence, l'alumine à mésoporosité contrôlée obtenue selon le procédé de l'invention se présente sous une forme fibrillaire. Ladite alumine à mésoporosité contrôlée est également analysée par physisorption à l'azote après un dégazage sous vide et est identifiée par une isotherme de type IV, une hystérèse de type H2 selon la classification de l'IUPAC (K.S.W. Sing, D.H Everett, R.A.W. Haul, L. Moscou, R.A. Pierotti, J. Rouquerol, T. Siemieniewska, IUPAC, Pure and Appl. Chem. 57 (1985) 603), caractéristiques de solides mésoporeux, avec une marche sur l'isotherme de désorption laquelle est caractéristique de mésopores de diamètre régulier. L'alumine à mésoporosité contrôlée obtenue selon le procédé de l'invention présente une surface spécifique S_{BET} déduite de la théorie BET (S. Brunauer, P.H. Emmett, E. Teller, J. Am.Chem. Soc. 60 (1938), 309), supérieure à 300 m²/g, préférentiellement supérieure à 400 m²/g. Elle présente une distribution de taille (diamètre) de mésopores, déduite de la théorie BJH (E.P. Barett, L.G. Joyner, P.P. Hallender, J. Am. Chem. Soc. 73 (1951) 373), appliquée sur la branche de désorption, centrée (D_{BJH}) entre 4 et 20 nm, préférentiellement entre 5 et 15 nm. La largeur de la distribution mésoporeuse est étroite et correspond à une valeur de taille ou de diamètre de mésopores minimale (Dmin) supérieure à 0,25*D_{BJH} et une valeur de taille ou diamètre de mésopores maximale (Dmax) inférieure à 1,73*D_{BJH}. Ladite alumine à mésoporosité contrôlée obtenue selon le procédé de l'invention présente un volume mésoporeux, mesuré à partir de l'isotherme à pression de vapeur saturante (V_{N2}, évalué par le volume d'un liquide condensé dans les pores du matériau analysé, à la pression proche de la pression de saturation (loi de Gurvitsch) : L. Gurvitsch; J. Phys. Chem. Soc. Russ. 47 (1915) 805), très élevé, supérieur ou égal à 0,6 ml/g et très préférentiellement supérieur ou égal à 0,8 ml/g. De manière préférée, ledit volume mésoporeux est inférieur à 4 ml/g. Conformément à l'invention, l'alumine mésoporeuse préparée selon le procédé de la présente invention est dépourvue de micropores et de macropores.

L'alumine à mésoporosité contrôlée obtenue selon le procédé de préparation selon l'invention est avantageusement utilisée comme support de catalyseur. La préparation d'un catalyseur comprenant ladite alumine à mésoporosité contrôlée en tant que support catalytique est réalisée selon toutes les méthodes de préparation de catalyseurs connues de l'Homme du métier. Un tel catalyseur comprend généralement une phase active métallique déposée dans la porosité d'un support formé de ladite alumine mésoporeuse. Le support est obtenu par mise en forme de ladite alumine mésoporeuse par les méthodes connues de l'homme du métier. Ladite alumine mésoporeuse peut être mise en forme avec l'ajout d'un liant minéral pour assurer après séchage et calcination la cohésion de la matrice formée. Ladite alumine mésoporeuse peut également être mise en forme avant sa calcination avec ou sans l'ajout d'un liant minéral. L'alumine mésoporeuse préparée selon le procédé de l'invention est avantageusement mise en forme par malaxage - extrusion, c'est-à-dire malaxée avec de la boehmite et une solution aqueuse acide pour favoriser la peptisation de la boehmite et former une pâte, laquelle est poussée à travers une filière pour former des extrudés, avec un diamètre généralement de 0,4 à 4 mm après séchage et calcination. L'alumine mise en forme est alors séchée pour évaporer la majorité du solvant (l'eau) introduit pendant la mise en forme et calcinée pour assurer la cohésion de la matrice formée et éventuellement extraire le surfactant par décomposition thermique, si celui-ci est encore présent.

La phase active peut être introduite dans la porosité de l'alumine préparée selon le procédé de l'invention avant la mise en forme, au cours de la mise en forme ou dans la porosité du support après la mise en forme. L'introduction dans la porosité est effectuée par les techniques d'imprégnation connues de l'Homme du métier. Le catalyseur peut par exemple contenir des métaux du groupe VIB et/ou VIII de la classification périodique, à caractère hydro-déshydrogénant. Il s'agit par exemple du molybdène et/ou du tunsgtène pour les éléments du groupe VIB, du cobalt et/ou du nickel pour les éléments du groupe VIII. De façon préférée, le métal du groupe VIB est introduit en même temps ou juste après le métal du groupe VIII, quel que soit le mode d'introduction. L'introduction des métaux est effectuée de préférence par imprégnation à sec de l'alumine préparée selon le procédé de l'invention avant ou après la mise en forme à l'aide de solutions contenant les sels précurseurs des métaux. Elle peut être effectuée par une ou plusieurs opérations d'imprégnation de l'alumine préparée selon le procédé de l'invention avant ou après mise en forme par une ou des solutions contenant le précurseur métallique ou les précurseurs métalliques. L'alumine préparée selon le procédé de l'invention contenant ainsi les métaux est séchée pour évaporer le solvant (l'eau) et calcinée pour convertir les précurseurs métalliques en oxydes métalliques. Dans le cas où les éléments sont introduits en plusieurs imprégnations des sels précurseurs correspondants, des étapes de séchage et calcination intermédiaires sont en général effectuées. Avant utilisation, il est souvent nécessaire de transformer les oxydes métalliques en sulfure afin de former l'espèce active. Cette phase d'activation s'effectue sous charge réductrice en présence d'hydrogène et d'hydrogène sulfuré.

Le catalyseur ainsi obtenu et comprenant ladite alumine à mésoporosité contrôlée obtenue selon le procédé de préparation selon l'invention est avantageusement utilisé pour l'hydroraffinage et/ou l'hydroconversion de charges hydrocarbonées telles que les coupes pétrolières, les coupes issues du charbon ou les hydrocarbures produits à partir du gaz naturel et est plus particulièrement utilisé pour l'hydrogénation, l'hydrodéazotation, l'hydrodéoxygénation, l'hydrodéaromatisation, l'hydrodésulfuration, l'hydrodémétallisation, l'hydroisomérisation, l'hydrodéalkylation et la déshydrogénation de charges hydrocarbonées telles que par exemple des charges contenant des composés aromatiques et/ou oléfiniques, et/ou naphténiques, et/ou paraffiniques, lesdites charges contenant éventuellement des métaux, et/ou de l'azote, et/ou de l'oxygène et /ou du soufre. De manière très préférée, ledit catalyseur comprenant ladite alumine à mésoporosité contrôlée obtenue selon le procédé de préparation selon l'invention est utilisé pour l'hydrodésulfuration et l'hydrodéazotation de charges hydrocarbonées. Dans le cas où une activité importante en hydrodésulfuration est souhaitée, les métaux de la fonction hydro-déshydrogénante présente dans le catalyseur comprenant l'alumine préparée selon le procédé de l'invention consistent en l'association de cobalt et de molybdène. Si une forte activité en hydrodéazotation est voulue, une association du nickel avec le molybdène ou le tunsgtène est préférée.

Les charges employées dans les divers procédés utilisant le catalyseur comprenant ladite alumine à mésoporosité contrôlée obtenue selon le procédé de préparation selon l'invention sont généralement choisies dans le groupe formé par les essences, les gazoles, les gazoles sous vide, les résidus désasphaltés ou non, les huiles paraffiniques, les cires et paraffines. Elles contiennent au moins un hétéroatome tels que soufre, oxygène, azote et éventuellement des métaux tels que nickel et vanadium. Les conditions de l'hydroraffinage ou de l'hydroconversion telles que température, pression, rapport volumique litre d'hydrogène/litre d'hydrocarbure, vitesse volumique horaire, peuvent être très variables en fonction de la nature de la charge, de la qualité des produits désirés et des installations dont dispose le raffineur. Les conditions opératoires utilisées dans le ou les réacteurs des divers procédés utilisant le catalyseur comprenant ladite alumine à mésoporosité contrôlée obtenue selon le procédé de préparation selon l'invention sont : une température supérieure à 200°C, de préférence comprise entre 200 et 450°C, sous une pression comprise entre 0,5 et 30 MPa, de préférence inférieure à 20 MPa, la vitesse spatiale étant comprise entre 0,1 et 10h⁻¹, de préférence comprise entre 0,1 et 8h⁻¹, et de manière très préférée entre 0,2 et 6h⁻¹, et la quantité d'hydrogène introduite est telle que le rapport volumique litre d'hydrogène/litre d'hydrocarbure HC soit compris entre 10 et 50001/1, de préférence entre 100 et 2000 1/1.

Les exemples qui suivent illustrent l'invention sans en limiter la portée. Les alumines exemplifiées ci-après sont analysées par les techniques d'analyse décrites ci-dessus dans la présente description.

### Exemple 1 (comparatif) : préparation d'une alumine A1 selon WO 2004/014799

Cet exemple décrit la préparation d'une alumine A1 à mésoporosité contrôlée selon le protocole décrit dans l'exemple 1-4 de la demande de brevet WO2004/014799 et la publication de H.C. Lee et al. (Microporous and Mesoporous Materials 79 (2005), 61-68) en utilisant le tri-sec-butoxyde d'aluminium (Al-sec-but) comme source d'aluminium, le bromure de cétyltriméthylammonium (CTAB) comme surfactant cationique et le 1-butanol (ButOH) comme solvant organique.

Le mélange présente la composition molaire suivante : 1 Al-sec-but : 0,5 CTAB : 2 H₂O : 10 ButOH.

35,69 g de bromure de cétyltriméthylammonium (CTAB) sont dissous dans 72,65 g de 1-butanol. 48,32 g de tri-sec butoxyde d'aluminium (Al-sec-but) sont également dissous dans 72,5 g de 1-butanol. La solution de CTAB est lentement ajoutée à la solution de Al-sec-but sous agitation soutenue. Après 0,5 h, 7,06 g d'eau sont lentement ajoutés au mélange. Le mélange est introduit dans un autoclave en inox recouvert d'une chemise en Teflon et est soumis à un traitement hydrothermal à 100 °C pendant 24 h. Le solide récupéré par filtration, est lavé abondamment à l'éthanol, et séché à température ambiante pendant 16 h puis en étuve ventilée à 110 °C pendant 5 h sous air ambiant. Il est ensuite calciné en four à mouffle à 500°C pendant 4 h sous air ambiant avec une rampe de montée en température de 2 °C/min. On obtient ainsi l'alumine A1.

L'alumine A1 est caractérisée par DRX aux grands angles, par DRX aux bas angles, par volumétrie à l'azote et par MET.

L'analyse DRX aux grands angles conduit à l'obtention d'un diffractogramme révélant que l'alumine A1 obtenue est une alumine gamma mal cristallisée. L'analyse DRX aux petits angles conduit à la visualisation d'un pic caractéristique d'une structure formée de mésopores sans ordre parfait à longue distance et présentant un diamètre de mésopores uniforme. L'analyse MET révèle que l'alumine A1 présente une structure vermiculaire avec des mésopores de diamètre régulier. L'analyse par volumétrie à l'azote (physisorption à l'azote) conduit à une surface spécifique de l'alumine A1 égale à 340 m²/g, à une distribution de taille (diamètre) de mésopores étroite comprise entre 1,0 nm et 7 nm, centrée sur 4,0 nm et à un volume mésoporeux de 0,45 ml/g. L'ensemble de ces données structurales est résumé dans le tableau 1.

### Exemple 2 (invention): préparation d'une alumine A2 à mésoporosité contrôlée

Cet exemple décrit la préparation d'une alumine A2 à mésoporosité contrôlée selon l'invention en utilisant le tri-sec butoxyde d'aluminium (Al-sec-but) comme source d'aluminium, le bromure de cétyltriméthylammonium (CTAB) comme surfactant cationique et l'éthanol (EtOH) comme solvant organique.

Le mélange présente la composition molaire suivante : 1 Al-sec-but : 0,5 CTAB : 2 H₂O : 10 EtOH.

35,69 g de bromure de cétyltriméthylammonium (CTAB) sont dissous dans 45,13 g d'éthanol. 48,32 g de tri sec butoxyde d'aluminium (Al-sec-but) sont également dissous dans 45,10 g d'éthanol. La solution de CTAB est lentement ajoutée à la solution de Al-sec-but sous agitation soutenue. Après 0,5 h, 7,06 g d'eau sont lentement ajoutés au mélange. Le mélange est introduit dans un autoclave en inox recouvert d'une chemise en Teflon et est soumis à un traitement hydrothermal à 100 °C pendant 24 h. Le solide est récupéré par filtration, est lavé abondamment à l'éthanol, et séché à température ambiante pendant 16 h puis en étuve ventilée à 110 °C pendant 5 heures sous air ambiant. Il est ensuite calciné en four à mouffle à 500°C pendant 4 heures sous air ambiant avec une rampe de montée en température de 2 °C/min. On obtient ainsi l'alumine A2.

L'alumine A2 est caractérisée par DRX aux grands angles, par DRX aux bas angles, par volumétrie à l'azote et par MET.

L'analyse DRX aux grands angles conduit à l'obtention d'un diffractogramme révélant que l'alumine A2 obtenue est une alumine gamma mal cristallisée. L'analyse DRX aux petits angles conduit à la visualisation d'un pic caractéristique d'une structure formée de mésopores sans ordre parfait à longue distance et présentant un diamètre de mésopores uniforme. L'analyse MET révèle que l'alumine A2 présente une structure fibrillaire. L'analyse par volumétrie à l'azote (physisorption à l'azote) conduit à une surface spécifique de l'alumine A2 égale à 423 m²/g, à une distribution de taille (diamètre) de mésopores étroite comprise entre 3,0 et 9,0 nm, centrée sur 6,2 nm, et à un volume mésoporeux de 0,85 ml/g. L'ensemble de ces données structurales est résumé dans le tableau 1.

### Exemple 3 (invention) : préparation d'une alumine A3 à mésoporosité contrôlée

On prépare une alumine A3 à mésoporosité contrôlée selon un procédé réalisé dans les mêmes conditions opératoires que celles dans lesquelles est préparée l'alumine A2, à l'exception de la température de calcination qui est égale dans cet exemple à 750°C. On obtient ainsi l'alumine A3.

L'alumine A3 est caractérisée par DRX aux grands angles, par DRX aux bas angles, par volumétrie à l'azote et par MET.

L'analyse DRX aux grands angles conduit à l'obtention d'un diffractogramme révélant que l'alumine A3 obtenue est une alumine gamma mal cristallisée. L'analyse DRX aux petits angles conduit à la visualisation d'un pic caractéristique d'une structure formée de mésopores sans ordre parfait à longue distance et présentant un diamètre de mésopores uniforme. L'analyse MET révèle que l'alumine A3 présente une structure fibrillaire. L'analyse par volumétrie à l'azote (physisorption à l'azote) conduit à une surface spécifique de l'alumine A3 égale à 309 m²/g, à une distribution de taille (diamètre) de mésopores étroite comprise entre 3,5 et 8,9 nm, centrée sur 6,7 nm, et à un volume mésoporeux de 0,69 ml/g. L'ensemble de ces données structurales est résumé dans le tableau 1.

**Tableau 1 : propriétés texturales des alumines A1, A2, A3 et A4**

| | S_{BET} (m²/g) | V_{N2} (ml/g) | D_{BJH} (nm) | Dₘᵢₙ (nm) | Dₘₐₓ (nm) |
|---|---|---|---|---|---|
| alumine A1 | 340 | 0,45 | 4,0 | 1,0 | 7,0 |
| alumine A2 | 423 | 0,85 | 6,2 | 3,0 | 9,0 |
| alumine A3 | 309 | 0,69 | 6,7 | 3,5 | 8,9 |
| alumine A4 | 250 | 0,68 | 10,4 | 3,0 | 25 |

Les alumines A2 et A3, préparées selon le procédé de l'invention, présentent une distribution de taille (diamètre) de mésopores étroite ainsi qu'une surface spécifique élevée. Elles présentent un volume mésoporeux significativement plus important que celui de l'alumine A1 préparée selon un procédé antérieur. L'alumine A3 qui est caractérisée par une surface spécifique et un volume mésoporeux élevés, alors qu'elle a été calcinée à une température élevée, présente une très bonne stabilité thermique.

### Exemple 4 : préparation des catalyseurs C1 C2, C3 et C4.

On prépare les catalyseurs C1, C2, C3 et C4 respectivement à partir des alumines A1, A2, A3 et A4, l'alumine A4 étant une alumine gamma commerciale référencée Versai 250 de La Roche qui a été mise en forme par malaxage-extrusion, séchée à 140°C pendant 2h sous air ambiant, calcinée à 600°C pendant 2h sous air ambiant et broyée et dont les propriétés texturales sont données dans le tableau 1.

Les catalyseurs C1, C2, C3 et C4 sont préparés par imprégnation à sec simultanée de nitrate de cobalt (Co(NO₃)₃)₉H₂O, Fluka) et d'heptamolybdate d'ammonium (NH₄)₆Mo₇O₂₄ 4H₂O), Fluka). La formulation est ajustée de manière à déposer sur chacune des alumines A1, A2, A3 et A4 10 % pds de molybdène et 2,45 % pds de cobalt. L'imprégnation est suivie d'une maturation de 2 h à température ambiante, d'un séchage en étuve ventilée sous air ambiant à 110°C pendant une durée de 16 h et d'une calcination en four à mouffle à 500°C pendant 8 h sous air ambiant avec une rampe de montée en température de 1,5 °C/min.

Chaque catalyseur est caractérisée par volumétrie à l'azote. Les résultats des analyses par volumétrie à l'azote réalisées sur les catalyseurs C1, C2, C3 et C4 figurent dans le tableau 2.

**Tableau 2 : propriétés texturales des catalyseurs C1, C2, C3 et C4**

| | S_{BET} (m²/g) | V_{N2} (ml/g) | D_{BJH} (nm) | Dₘᵢₙ (nm) | Dₘₐₓ (nm) |
|---|---|---|---|---|---|
| C1 | 261 | 0,32 | 4,5 | 1,5 | 7,5 |
| C2 | 324 | 0,60 | 7,0 | 3,8 | 9,8 |
| C3 | 241 | 0,56 | 7,4 | 4,0 | 9,9 |
| C4 | 196 | 0,55 | 11,5 | 4,0 | 26,0 |

Les catalyseurs C2 et C3 comprenant respectivement l'alumine A2 et l'alumine A3 à mésoporosité contrôlée et préparées selon le procédé de l'invention, présentent une distribution de taille (diamètre) de mésopores étroite, une surface spécifique élevée et surtout un volume mésoporeux très élevé malgré le dépôt de la phase active par rapport au catalyseur C1 comprenant l'alumine A1 préparée selon l'art antérieur. Les catalyseurs C2 et C3 présentent par ailleurs une distribution de taille (diamètre) de mésopores étroite et une surface spécifique élevée par rapport à celles du catalyseur C4 élaboré avec l'alumine conventionnelle A4. Les alumines A2 et A3 préparées selon le procédé de l'invention présentent donc de bonnes propriétés en tant que support de catalyseur et également une très bonne stabilité chimique.

### Exemple 5 : évaluations catalytiques des catalyseurs C1, C2, C3 et C4 en hydrodésulfuration du thiophène (molécule modèle soufrée)

L'hydrodésulfuration du thiophène est sélectionnée comme test catalytique de référence pour évaluer les performances des catalyseurs C1, C2, C3 et C4 en hydrodésulfuration d'hydrocarbures. Le thiophène est une molécule modèle simple et représentative des composés sulfurés aromatiques présents dans les hydrocarbures. Les performances catalytiques des catalyseurs C1, C2, C3 et C4 sont évaluées en termes de conversion en thiophène et de sélectivité en butane qui est le produit recherché de la réaction d'hydrodésulfuration. S'agissant d'un test d'une molécule modèle, les conditions de mise en oeuvre sont adaptées par rapport à celles mises en oeuvre sur une unité industrielle.

Les catalyseurs C1, C2, C3 et C4 sont soumis à une sulfuration opérée sous pression atmosphérique à 400°C pendant 2 h (rampe de montée en température de 6°C/min) sous H₂S (10 % vol) dans un flux d'hydrogène (60 ml/min). La sulfuration est effectuée in situ avant de réaliser le test catalytique dans un réacteur à lit fixe chargé avec 0,2 g de catalyseur, à pression atmosphérique. Le thiophène, purifié par deux distillations successives sous vide, est introduit dans le réacteur à une pression constante de 6,65 kPa dans un flux d'hydrogène (10 ml/min). Ce test catalytique est mis en oeuvre à une température égale à 350°C et une pression égale à 0,1 MPa.

La teneur en réactif (thiophène) et en produits (butane, but-1-ène, *trans* but-2-ène, *cis* but-2-ène) est analysée avec un chromatographe en phase gazeuse équipé d'un détecteur à ionisation de flamme et d'une colonne Plot-alumina.

Les performances catalytiques des catalyseurs C1, C2, C3 et C4 sont évaluées par la détermination de la conversion en thiophène et de la sélectivité en butane. Les résultats sont donnés dans le tableau 3.

La conversion en thiophène est calculée comme suit : Cvₜₕᵢₒ = (∑aᵢ/4) / (aₜₕᵢₒ/3,4 + ∑aᵢ/4) où aᵢ est l'aire du pic sur le chromatogramme correspondant au produit i, à savoir au butane, au but-1-ène, au *trans* but-2-ène et au *cis* but-2-ène, et aₜₕᵢₒ est l'aire du pic sur le chromatogramme correspondant au thiophène.

La sélectivité en butane est calculée comme suit : Sél_{butane} = a_{butane} / ∑aᵢ/4
où aᵢ a été défini ci-dessus pour le calcul de la conversion et a_{butane} est l'aire du pic sur le chromatrogramme correspondant au butane.

**Tableau 3 : conversion et sélectivité des catalyseurs C1, C2, C3 et C4**

| **Catalyseur** | **Conversion (%)** | **Sélectivité (%)** |
|---|---|---|
| C1 | 17 | 15 |
| C2 | 32 | 20 |
| C3 | 30 | 18 |
| C4 | 29 | 17 |

Les résultats démontrent que les catalyseurs C2 et C3 comprenant respectivement l'alumine A2 et A3 préparées selon le procédé de l'invention conduisent à de bien meilleures performances catalytiques en termes de conversion du thiophène et de sélectivité en butane que celles obtenues au moyen du catalyseur C1 comprenant une alumine mésoporeuse préparée selon un procédé antérieur. Les catalyseurs C2 et C3 conduisent également à une conversion en thiophène et une sélectivité en butane supérieures à celles obtenues avec le catalyseur C4 comprenant une alumine conventionnelle commerciale. Les catalyseurs C2 et C3 sont donc des catalyseurs plus actifs et plus sélectifs que les catalyseurs C1 et C4.

## Revendications

1. Procédé de préparation d'une alumine mésoporeuse présentant un volume mésoporeux supérieur ou égal à 0,6 ml/g comprenant les étapes suivantes :
a) le mélange en solution aqueuse d'au moins une source d'aluminium constituée par un alcoxyde d'aluminium, d'au moins un surfactant cationique et d'au moins un solvant organique choisi parmi le méthanol et l'éthanol, la composition molaire du mélange dans ladite étape a) étant telle que le rapport molaire eau/source d'aluminium est compris entre 0,1 et 10, le rapport molaire surfactant cationique/source d'aluminium est compris entre 0,1 et 10 et le rapport molaire solvant organique / eau est compris entre 4 et 6;
b) le traitement hydrothermal du mélange issu de ladite étape a) ;
c) le séchage du solide issu de ladite étape b) ;
d) la calcination du solide issu de ladite étape c).

2. Procédé de préparation selon la revendication 1 tel que ledit surfactant cationique employé pour la mise en oeuvre de l'étape a) est un composé cationique de type ammonium quaternaire de formule CH₃(CH₂)ₙN(CH₃)₃,X, avec n compris entre 8 et 22 et X étant un halogénure, un acétate, un phosphate, un nitrate, un méthylsulfate ou un hydroxyde.

3. Procédé de préparation selon la revendications 2 tel que ledit surfactant cationique est le bromure de céthyltriméthylammonium.

4. Procédé de préparation selon l'une des revendications 1 à 3 tel que ladite source d'aluminium est le tri-sec butoxyde d'aluminium (Al(OCH(CH₃)(C₂H₅))₃) ou l'isopropoxyde d'aluminium (Al(OCH(CH₃)₂)₃).

5. Procédé de préparation selon l'une des revendications 1 à 4 tel que ledit solvant organique est l'éthanol.

6. Procédé de préparation selon l'une des revendications 1 à 5 tel que ledit traitement hydrothermal est opéré à une température comprise entre 25 et 200°C pendant une durée comprise entre 5 et 100 heures.

7. Procédé de préparation selon l'une des revendications 1 à 6 tel que le séchage est opéré à une température comprise entre 25 et 150°C.

8. Procédé de préparation selon l'une des revendications 1 à 7 tel que la calcination est opérée à une température comprise entre 400 et 800°C.

9. Procédé de préparation selon l'une des revendications 1 à 8 tel que ladite alumine mésoporeuse se présente sous forme fibrillaire.

10. Procédé de préparation selon l'une des revendications 1 à 9 tel que ladite alumine mésoporeuse présente une surface spécifique supérieure à 300 m²/g.

11. Procédé de préparation selon l'une des revendications 1 à 10 tel que ladite alumine mésoporeuse est dépourvue de micropores et de macropores.

## Patentansprüche

1. Verfahren zur Herstellung eines mesoporösen Aluminiumoxids, das ein mesoporöses Volumen größer oder gleich 0,6 ml/g aufweist, umfassend die folgenden Schritte:
a) Mischung in wässriger Lösung mindestens einer Aluminium-Quelle, die aus einem Aluminiumalkoxid, mindestens einem kationischen grenzflächenaktiven Mittel und mindestens einem organischen Lösungsmittel, ausgewählt aus Methanol und Ethanol, besteht, wobei die Molzusammensetzung der Mischung in dem Schritt a) derart ist, dass das Molverhältnis von Wasser/Aluminium-Quelle zwischen 0,1 und 10 beträgt, das Molverhältnis von grenzflächenaktivem Mittel/Aluminium-Quelle zwischen 0,1 und 10 beträgt, und das Molverhältnis von organischem Lösungsmittel/Wasser zwischen 4 und 6 beträgt;
b) hydrothermische Behandlung der Mischung aus dem Schritt a);
c) Trocknung des Feststoffs aus dem Schritt b);
d) Calcinierung des Feststoffs aus dem Schritt c).

2. Herstellungsverfahren nach Anspruch 1, wobei das kationische grenzflächenaktive Mittel, das zur Durchführung des Schritts a) verwendet wird, eine kationische Verbindung des Typs eines quaternären Ammoniums mit der Formel CH₃(CH₂)ₙN(CH₃)₃,X ist, wobei n zwischen 8 und 22 liegt, und X ein Halogenid, ein Acetat, ein Phosphat, ein Nitrat, ein Methylsulfat oder ein Hydroxid ist.

3. Herstellungsverfahren nach Anspruch 2, wobei das kationische grenzflächenaktive Mittel Cethyltrimethylammoniumbromid ist.

4. Herstellungsverfahren nach einem der Ansprüche 1 bis 3, wobei die Aluminium-Quelle Aluminium-trisek.butoxid (Al(OCH(CH₃)(C₂H₅))₃) oder Aluminiumisopropoxid (Al(OCH(CH₃)₂)₃) ist.

5. Herstellungsverfahren nach einem der Ansprüche 1 bis 4, wobei das organische Lösungsmittel Ethanol ist.

6. Herstellungsverfahren nach einem der Ansprüche 1 bis 5, wobei die hydrothermische Behandlung bei einer Temperatur zwischen 25 und 200 °C während einer Dauer zwischen 5 und 100 Stunden betrieben wird.

7. Herstellungsverfahren nach einem der Ansprüche 1 bis 6, wobei die Trocknung bei einer Temperatur zwischen 25 und 150 °C betrieben wird.

8. Herstellungsverfahren nach einem der Ansprüche 1 bis 7, wobei die Calcinierung bei einer Temperatur zwischen 400 und 800 °C betrieben wird.

9. Herstellungsverfahren nach einem der Ansprüche 1 bis 8, wobei das mesoporöse Aluminiumoxid eine fibrilläre Form aufweist.

10. Herstellungsverfahren nach einem der Ansprüche 1 bis 9, wobei das mesoporöse Aluminiumoxid eine spezifische Oberfläche größer als 300 m²/g aufweist.

11. Herstellungsverfahren nach einem der Ansprüche 1 bis 10, wobei das mesoporöse Aluminiumoxid keine Mikroporen und Makroporen aufweist.

## Claims

1. A process for preparing a mesoporous alumina that has a mesopore volume of 0.6 ml/g or more, comprising the following steps:
a) mixing, in aqueous solution, at least one source of aluminium constituted by an aluminium alkoxide, at least one cationic surfactant and at least one organic solvent selected from methanol and ethanol, wherein the molar composition of the mixture in said step a) is such that the water/aluminium source molar ratio is in the range 0.1 to 10, the cationic surfactant/aluminium source molar ratio is in the range 0.1 to 10 and the organic solvent/water molar ratio is in the range 4 to 6;
b) hydrothermally treating the mixture formed in said step a);
c) drying the solid formed in said step b);
d) calcining the solid formed in said step c).

2. The preparation process according to claim 1, wherein said cationic surfactant employed to carry out step a) is a cationic quaternary ammonium type compound with formula CH₃(CH₂)ₙN(CH₃)₃,X, wherein n is in the range 8 to 22 and X is a halide, an acetate, a phosphate, a nitrate, a methylsulphate or a hydroxide.

3. The preparation process according to claim 2, wherein said cationic surfactant is cetyltrimethylammonium bromide.

4. A preparation process according to one of claims 1 to 3, wherein said source of aluminium is aluminium tri-sec butoxide (Al(OCH(CH₃)(C₂H₅))₃) or aluminium isopropoxide (Al(OCH(CH₃)₂)₃).

5. The preparation process according to one of claims 1 to 4, wherein said organic solvent is ethanol.

6. The preparation process according to one of claims 1 to 5, wherein said hydrothermal treatment is carried out at a temperature in the range 25°C to 200°C for a period in the range 5 to 100 hours.

7. The preparation process according to one of claims 1 to 6, wherein drying is carried out at a temperature in the range 25°C to 150°C.

8. The preparation process according to one of claims 1 to 7, wherein calcining is carried out at a temperature in the range 400°C to 800°C.

9. The preparation process according to one of claims 1 to 8, wherein said mesoporous alumina is in the fibrillated form.

10. The preparation process according to one of claims 1 to 9, wherein said mesoporous alumina has a specific surface area of more than 300 m²/g.

11. The preparation process according to one of claims 1 to 10, wherein said mesoporous alumina is free of micropores and macropores.
